# EUROPEAN PATENT SPECIFICATION

(11) **EP 3 993 470 B1**
(45) Date of publication and mention of the grant of the patent: **03.01.2024**
(21) Application number: 20869662.5
(22) Date of filing: 08.09.2020
(51) Int. Cl.: H04W 12/06, H04W 48/02, H04W 48/18

(54) **CORE NETWORK NODE, ACCESSIBILITY MANAGEMENT DEVICE, AND COMMUNICATION METHOD**
KERNNETZWERKKNOTEN, ZUGÄNGLICHKEITSVERWALTUNGSVORRICHTUNG UND KOMMUNIKATIONSVERFAHREN
NOEUD DE RÉSEAU CENTRAL, DISPOSITIF DE GESTION D'ACCESSIBILITÉ, ET PROCÉDÉ DE COMMUNICATION

(30) Priority: 25.09.2019 JP 2019174767
(43) Date of publication of application: 04.05.2022
(73) Proprietor: NEC Corporation, 108-8001 Tokyo (JP)
(72) Inventor: TAMURA Toshiyuki, Tokyo 108-8001 (JP); TAKAKURA Tsuyoshi, Tokyo 110-0012 (JP)
(74) Representative: MacDougall, Alan John Shaw
(86) International application number: PCT/JP2020/033950
(87) International publication number: WO 2021/059966

(56) References cited:
- ZTE: "AMF capability of Network Slice-Specific Authentication and Authorization", 3GPP DRAFT; S2-1908603_E-MAIL_REV9_S2-1908146 501 SLICE SPECIFIC AA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FR , vol. SA WG2, no. Sapporo, Japan; 20190624 - 20190628 9 July 2019 (2019-07-09), XP051757048, Retrieved from the Internet: URL:http://www.3gpp.org/ftp/tsg_sa/WG2_Arc h/TSGS2_134_Sapporo/Docs/S2-1908603.zip [retrieved on 2019-07-09]
- ANONYMOUS: "3rd Generation Partnership Project; Technical Specification Group Services and System Aspects; System Architecture for the 5G System (5GS); Stage 2 (Release 16)", 3GPP STANDARD; TECHNICAL SPECIFICATION; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. V16.2.0 24 September 2019 (2019-09-24), pages 1-391, XP051784669, Retrieved from the Internet: URL:ftp://ftp.3gpp.org/Specs/archive/23_se ries/23.501/23501-g20.zip 23501-g20.doc [retrieved on 2019-09-24]
- "3rd Generation Partnership Project; Technical Specification Group Core Network and Terminals; Non-Access-Stratum (NAS) protocol for 5G System (5GS); Stage 3 (Release 16)", 3GPP TS 24.501 V16.2.0, vol. CT WG1, 24 September 2019 (2019-09-24), page 73, XP051784713,
- "3rd Generation Partnership Project; Technical Specification Group Services and System Aspects; System Architecture for the 5G System (5GS); Stage 2 (Release 16)", 3GPP TS 23.501 V16.2.0, vol. SA WG2, 24 September 2019 (2019-09-24), pages 189-190, XP051784669,
- NEC: "Prevent unauthorized UE to access network slice that requires NSSAA", 3GPP TSG-SA WG2 Meeting #136 S 2-1911140, vol. SA WG2, 8 November 2019 (2019-11-08), XP051821242,

## Description

### Technical Field

The present disclosure relates to an access mobility management apparatus, a core network node, a control method, and a communication method.

### Background Art

In a telecommunications field, an effort of achieving a new generation network called a fifth-generation (5G) network has been made. In order to develop the 5G network that provides a service for a plurality of vertical service providers and provides a service for various terminals, activity has started in a plurality of research and standardization organizations. Particularly, a third-generation partnership project (3GPP) has been examining a next-generation communication technique and a system architecture of the 5G network being a next-generation mobile communication system. Particularly, in the 3GPP, a 5G system (5GS) has been specified as a system for achieving a 5G mobile communication system. Specifications of the 5GS are disclosed in, for example, Non Patent Literature 1, Non Patent Literature 2, and Non Patent Literature 3.

For example, as one of main characteristics of the 5GS, a network slicing technique being specified has been advanced.

A network slice is a collection of logical network functions and a collection of resources for achieving a communication service in a specific use case. Network slicing is processing of dividing one physical network into a plurality of slices.

Non Patent Literature 1 describes processing in which a wireless terminal (UE; user equipment) uses single network slice selection assistance information (S-NSSAI).

The S-NSSAI may be formed of a slice/service type (SST) and a slice differentiator (SD). Further, the S-NSSAI may be formed of only the SST. Note that the SST may indicate a function or a service aspect of a network slice, and the SD may be complementary information to be used for identifying the same network slice indicated in the SST.

A network slice instance is a substance of a network slice including a control plane (c-plane; cp) function and a user plane (u-plane; up) function that are described in Non Patent Literature 1.

For a relationship between the S-NSSAI and the network slice instance, a plurality of different pieces of S-NSSAI may be associated with one network slice instance. Further, one piece of S-NSSAI may be associated with one network slice instance, or may be associated with a plurality of different network slice instances. A network selects an appropriate network slice instance by using the S-NSSAI and the like. A function of selecting a network slice instance is described in Section 5.15 in Non Patent Literature 1. The network slice instance selected herein provides the UE with a service specialized to a network slice.

Network slice selection assistance information (NSSAI) is a collection of pieces of the S-NSSAI. Further, the NSSAI includes five NSSAI aspects of Configured NSSAI, Rejected NSSAI, Allowed NSSAI, Requested NSSAI, and Subscribed NSSAI.

The Requested NSSAI includes one or more pieces of S-NSSAI to be transmitted from the UE to a network. The Allowed NSSAI includes one or more pieces of S-NSSAI permitted by a network to be used. The Rejected NSSAI includes S-NSSAI rejected by a network to be used, and a cause value is associated with each piece of S-NSSAI included in the Rejected NSSAI. The Configured NSSAI includes one or more pieces of S-NSSAI indicated in the UE to be applicable to one or more public land mobile networks (PLMNs). The Subscribed NSSAI is S-NSSAI based on subscriber information, and the Subscribed NSSAI may be set for each PLMN on an assumption that the UE moves to another PLMN.

Furthermore, in the 3GPP, examination of a network slice-specific authentication and authorization (NSSAA) feature has been advanced. Details of an NSSAA procedure is described in Section 5.15 in Non Patent Literature 1. As described in Non Patent Literature 1, a procedure of the NSSAA is activated by a network, and the network eventually notifies the UE of a result of the NSSAA. Whether the UE is permitted to access a network slice, based on the result of the NSSAA, is controlled by the network.

### Citation List

### Non Patent Literature

[Non Patent Literature 1] 3GPP TS 23.501 V16.1.0 (2019-06)
[Non Patent Literature 2] 3GPP TS 23.502 V16.1.1 (2019-06)
[Non Patent Literature 3] 3GPP TS 24.501 V16.1.0 (2019-06)
[Non Patent Literature 4] ANONYMOUS: "3rd Generation Partnership Project; Technical Specification Group Services and System Aspects; System Architecture for the 5G System (5GS); Stage 2 (Release 16)", 3GPP STANDARD; TECHNICAL SPECIFICATION; 3GPP TS 23.501, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE vol. SA WG2, no. V16.2.0 24 September 2019 (2019-09-24), pages 1-391, XP051784669
[Non Patent Literature 5] ZTE: "AMF capability of Network Slice-Specific Authentication and Authorization", 3GPP DRAFT; S2-1908603_E-MAIL_REV9_S2-1908146 501 SLICE SPECIFIC AA, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FR vol. SA WG2, no. Sapporo, Japan; 20190624 - 20190628 9 July 2019 (2019-07-09), XP051757048

### Technical Problem

When a communication operator requests the NSSAA procedure to the UE using a network slice, the UE, a core network of the 5GS, and a security apparatus related to the network slice each need to be compatible with the NSSAA procedure. However, when the UE and the security apparatus related to the network slice have the NSSAA feature, and the core network of the 5GS is not compatible with the NSSAA feature, there is a problem that the procedure of the NSSAA is not normally performed even though the communication operator requests the NSSAA procedure. Specifically, when the core network node is not compatible with the NSSAA feature, a command for performing the NSSAA procedure related to the UE cannot be interpreted, and thus whether the NSSAA procedure needs to be performed cannot be determined. Thus, in this case, when the core network node can normally perform processing other than the NSSAA procedure, the core network node permits the UE to access the network slice without determination of whether it is necessary to perform the NSSAA procedure. Thus, even when the UE has the NSSAA feature, the UE is permitted to access the network slice without performing the NSSAA procedure.

### Summary of the Invention

The invention is defined by the appended claims.

The present invention provides a first core network node, a second core network node, and a communication method as disclosed in the appended independent claims. Optional, but advantageous features are disclosed in the appended dependent claims.

In one example, a first core network node is disclosed including: a reception means for receiving, from a second core network for access and mobility management in the core network, first information indicating whether a network slice-specific authentication and authorization (NSSAA) feature is supported by the second core network node; and a transmission means for transmitting, to the second core network node, second information indicating a network slice being associated with the first information among pieces of information indicating a network slice being associated with a certain piece of subscriber information wherein when the first information does not indicate that an NSSAA feature is supported by the second core network node, the second information does not include information indicating a network slice requiring NSSAA among pieces of information indicating a network slice being associated with the certain piece of subscriber information.

In another example, a second core network node for an access mobility management apparatus in a core network is disclosed, the second core network node including : a transmission means for transmitting, to first a core network node in the core network, first information indicating whether a network slice-specific authentication and authorization (NSSAA) feature is supported by the second core network node; and a reception means for receiving, from the first core network node, second subscriber information indicating a network slice being associated with the first information among pieces of information indicating a network slice being associated with a certain piece of subscriber information wherein when the first information does not indicate that an NSSAA feature is supported by the second core network node, the second information does not include information indicating a network slice requiring NSSAA among pieces of information indicating a network slice being associated with the certain piece of subscriber information.

A core network node according to one aspect of the present disclosure includes: a reception means for receiving, from a first access mobility management apparatus, a request for selecting an access mobility management apparatus; and a transmission means for transmitting, to the first access mobility management apparatus, information indicating a second access mobility management apparatus configured to support a network slice-specific authentication and authorization (NSSAA) feature, in response to the request.

In another example, a communication method of a first core network node in a core network is disclosed, the communication method comprising: receiving, from an access mobility management apparatus, first information indicating whether a network slice-specific authentication and authorization (NSSAA) feature is supported; and transmitting, to the access mobility management apparatus, second information indicating a network slice being associated with the first information among pieces of information indicating a network slice being associated with a certain piece of subscriber information.

### Advantageous Effects of Invention

The present disclosure is able to provide an access mobility management apparatus, a core network node, a control method, and a communication method that are capable of appropriately determining whether access to a network slice is enabled.

### Brief Description of the Drawings

Fig. 1 is a configuration diagram of an access mobility management apparatus according to an aspect 1.
Fig. 2 is a configuration diagram of a core network node according to the aspect 1.
Fig. 3 is a configuration diagram of a communication system according to an aspect 2.
Fig. 4 is a configuration diagram of a UDM according to the aspect 2.
Fig. 5 is a diagram illustrating a flow of Registration processing according to the aspect 2.
Fig. 6 is a diagram illustrating a parameter indicating that an NSSAA feature according to the aspect 2 is supported.
Fig. 7 is a diagram illustrating a parameter indicating that the NSSAA feature according to the aspect 2 is supported.
Fig. 8 is a configuration diagram of a core network node according to an aspect 3.
Fig. 9 is a configuration diagram of an NSSF according to the aspect 3.
Fig. 10 is a diagram illustrating a flow of AMF re-allocation processing according to the aspect 3.
Fig. 11 is a diagram illustrating a flow of the AMF re-allocation processing according to the aspect 3.
Fig. 12 is a configuration diagram of the apparatus according to each of the aspects.

### Description of Embodiments

### (Aspect 1)

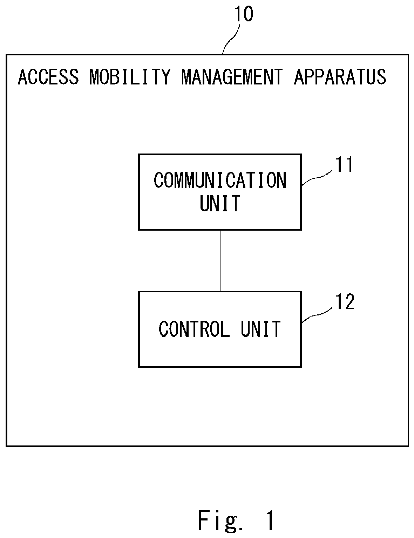

Hereinafter, an aspect of the present invention will be described with reference to drawings. A configuration example of an access mobility management apparatus 10 according to the aspect 1 will be described by using Fig. 1. The access mobility management apparatus 10 may be a computer apparatus that operates by a processor executing a program stored in a memory.

The access mobility management apparatus 10 includes a communication unit 11 and a control unit 12. The communication unit 11 and the control unit 12 may be software or a module whose processing is performed by a processor executing a program stored in a memory. Alternatively, the communication unit 11 and the control unit 12 may be a circuit or hardware such as a chip.

The communication unit 11 is a functional unit for connecting the access mobility management apparatus 10 to another core network node. Furthermore, the communication unit 11 is a functional unit for connecting the access mobility management apparatus 10 to an access network, and connecting the access mobility management apparatus 10 to a wireless terminal via the access network. In other words, the access mobility management apparatus 10 can transmit and receive user data and control information to and from an apparatus in the access network and another core network via the communication unit 11.

The core network is a network included in a communication system. For example, the access network is also included in the communication system. The wireless terminal communicates with or is connected to, via the access network, the access mobility management apparatus 10 or a core network node 15 that are disposed in the core network.

The communication unit 11 transmits information indicating whether an NSSAA feature is supported to the core network node 15. An NSSAA procedure is a network slice-specific authentication and authorization procedure being performed by a security apparatus on a wireless terminal that requests use of a network slice from each network slice. The security apparatus may be, for example, an authentication authorization accounting (AAA) server or a Radius server. The wireless terminal may be, for example, a cellular phone terminal, a smartphone terminal, or a tablet type terminal. Further, the wireless terminal may be an Internet of Things (IoT) terminal or a machine type communication (MTC) terminal. The core network node 15 may be an apparatus that manages subscriber information, or an apparatus having a function of selecting the access mobility management apparatus 10.

A feature related to an NSSAA procedure may be a feature of recognizing a parameter needed for the NSSAA procedure, and performing processing due to the recognized parameter. The feature related to the NSSAA procedure may be a feature of reading, when, for example, the communication unit 11 receives a message including capability information capable of performing the NSSAA procedure from another apparatus, the capability information from the received message. Furthermore, the feature related to the NSSAA procedure may be a feature of transmitting received capability information to another apparatus. For example, the communication unit 11 may receive capability information from the wireless terminal or the core network node 15, and transmit the capability information to the wireless terminal or the core network node 15. Furthermore, the feature related to the NSSAA procedure may be a feature of reading, when a message including identification information that identifies a network slice requiring the NSSAA procedure is received, the identification information about the network slice from the received message. The communication unit 11 may receive identification information about a network slice requiring the NSSAA procedure from the core network node 15. Furthermore, the feature related to the NSSAA procedure may be a feature of transmitting identification information about a network slice requiring the NSSAA procedure to the wireless terminal.

The communication unit 11 receives, from the core network node 15, information related to a network slice being associated with information indicating whether the NSSAA feature is supported. The information related to the network slice being associated with the information indicating whether the NSSAA feature is supported is associated with information indicating whether the NSSAA feature is supported. In other words, the information related to the network slice being associated with the information indicating whether the NSSAA feature is supported is specified or changed according to the information indicating whether the NSSAA feature is supported.

The information related to the network slice being associated with the information indicating whether the NSSAA feature is supported may be, for example, information indicating a network slice to which the wireless terminal subscribes. Alternatively, the information related to the network slice being associated with the information indicating whether the NSSAA feature is supported may be information indicating a network slice requesting the NSSAA procedure.

The control unit 12 is a functional unit for controlling the access mobility management apparatus 10, and achieves various types of processing of the entire access mobility management apparatus 10 by reading and executing various types of information and programs being stored in a memory.

The control unit 12 determines whether to permit use of a network slice, based on the information related to the network slice being associated with the information indicating whether the NSSAA feature is supported. Determination of whether to permit use also includes specification of a network slice permitted to be used, specification of a network slice that is not permitted to be used, and specification of a network slice put on hold for use. The network slice put on hold for use may be a network slice determined whether to be permitted to be used by the wireless terminal in the NSSAA procedure.

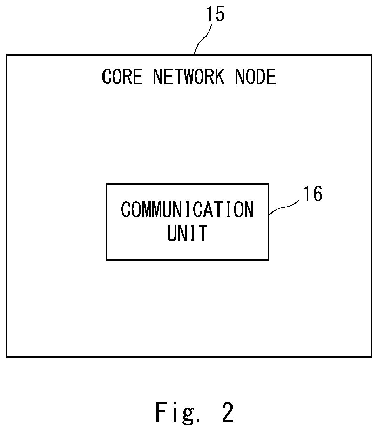

Then, a configuration example of the core network apparatus 15 according to the aspect 1 will be described by using Fig. 2. The core network node 15 may be a computer apparatus that operates by a processor executing a program stored in a memory. The core network node 15 includes a communication unit 16. The communication unit 16 may be software or a module whose processing is performed by a processor executing a program stored in a memory.
Alternatively, the communication unit 16 may be a circuit or hardware such as a chip.

The communication unit 16 receives, from the access mobility management apparatus 10, information indicating whether the NSSAA feature is supported. Furthermore, the communication unit 16 specifies information related to a network slice being associated with the information indicating whether the NSSAA feature is supported. Then, the communication unit 16 transmits the specified information related to the network slice to the access mobility management apparatus 10. For example, when the communication unit 16 receives information indicating that the NSSAA feature is supported, the communication unit 16 may specify information related to a network slice requiring NSSAA, and transmit the specified information to the access mobility management apparatus 10. Alternatively, when the communication unit 16 receives information that does not indicate that the NSSAA feature is supported, the communication unit 16 may perform control in such a way as not to transmit information related to a network slice requiring NSSAA to the access mobility management apparatus 10.

As described above, the core network node 15 receives, from the access mobility management apparatus 10, information indicating whether a network slice-specific authentication and authorization (NSSAA) feature is supported, and transmits information related to a network slice being associated with the received information to the access mobility management apparatus 15. For example, the core network node 15 can perform control in such a way as not to transmit information related to a network slice requiring the NSSAA feature to the access mobility management apparatus 10 that does not support the NSSAA feature. In this way, the core network node 15 can appropriately determine whether access to a network slice is enabled even when the access mobility management apparatus 10 does not have the NSSAA feature.

Further, the access mobility management apparatus 10 can transmit information indicating whether the NSSAA feature is supported. Furthermore, the access mobility management apparatus 10 receives, from the core network node 15, information related to a network slice being associated with the information indicating whether the NSSAA feature is supported. The information related to the network slice being associated with the information indicating whether the NSSAA feature is supported is set according to the information indicating whether the access mobility management apparatus 10 supports the NSSAA feature.

In this way, the access mobility management apparatus 10 receives information set according to whether the NSSAA feature is supported, and can thus appropriately determine whether access to a network slice is enabled for a wireless terminal. For example, when the access mobility management apparatus 10 does not support the NSSAA feature, the access mobility management apparatus 10 receives information related to a network slice that does not require the NSSAA feature being set according to a fact that the access mobility management apparatus 10 does not support the NSSAA feature, and thus receives only information capable of appropriately determining whether access is enabled without using the NSSAA feature, and can achieve determination of whether desired access is enabled.

### (Aspect 2)

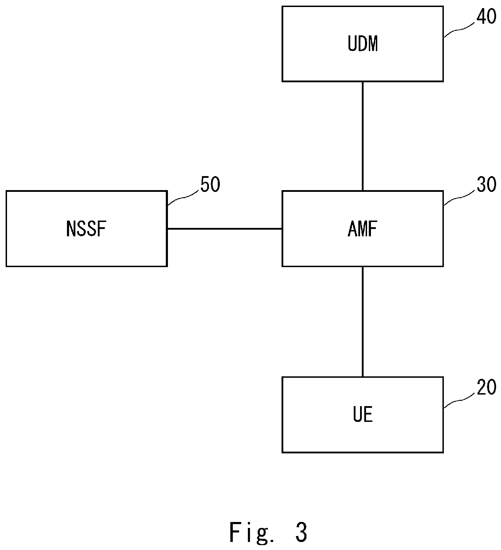

Then, a configuration example of a communication system according to an aspect 2 will be described by using Fig. 3. The communication system in Fig. 3 includes a UE 20, an access and mobility management function (AMF) entity 30 (hereinafter referred to as an AMF 30), a unified data management (UDM) entity 40 (hereinafter referred to as a UDM 40), and a network slice selection function (NSSF) entity 50 (hereinafter referred to as an NSSF 50). The UE 20 corresponds to a wireless terminal. The AMF 30 corresponds to the access mobility management apparatus 10 in Fig. 1. Further, the UDM 40 and the NSSF 50 correspond to a core network node.

A core network is a network including at least the AMF 30, the UDM 40, and the NSSF 50. Each of the AMF 30, the UDM 40, and the NSSF 50 may be referred to as a core network node or a core network apparatus. A fact that the core network transmits and receives a message and/or performs a procedure means that an apparatus in the core network transmits and receives a message and/or performs a procedure.

An access network is a wireless network that connects the UE and the core network. The access network may be a 3GPP network, or a non-3GPP network. The 3GPP network may be NG-(R)AN. An access network node indicates at least a part of gNB and ng-eNB, and may be referred to as an NG-(R)AN node or an NG-(R)AN apparatus. A fact that the NG-(R)AN transmits and receives a message and/or performs a procedure means that an apparatus in the NG-(R)AN transmits and receives a message and/or performs a procedure. Note that gNB may be gNB having a new radio (NR) function constituting the NG-(R)AN. ng-eNB may be eNB having an evolved universal terrestrial radio access (E-UTRA) function constituting the NG-(R)AN.

The AMF 30 manages access, mobility, and the like related to the UE 20. The UDM 40 manages subscriber information related to the AMF 30. The NSSF 50 selects an AMF that manages access and mobility of the UE 20. Specifically, the NSSF 50 may specify at least one AMF to be a candidate in re-allocation of an AMF, or selection or re-selection of an AMF.

The UE 20 holds Configured NSSAI for each application. The UE 20 transmits, to the AMF 30, Requested NSSAI including S-NSSAI used in Serving PLMN in a Registration procedure. The UDM 40 holds Subscribed NSSAI including S-NSSAI that can be provided to the UE 20. The AMF 30 acquires the Subscribed NSSAI from the UDM 40. Furthermore, the AMF 30 decides Allowed NSSAI or Rejected NSSAI by using the Requested NSSAI and the Subscribed NSSAI. The AMF 30 transmits the decided Allowed NSSAI or the decided Rejected NSSAI to the UE 20.

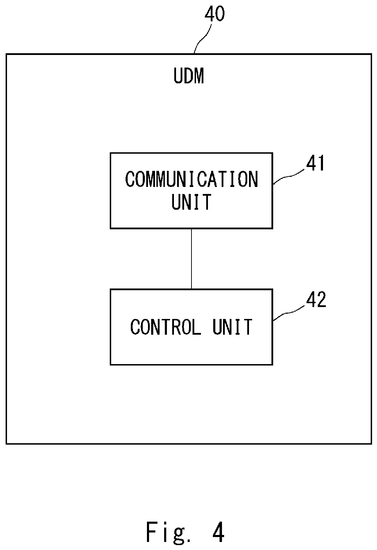

Then, a configuration example of the UDM 40 will be described by using Fig. 4. The UDM 40 may be a computer apparatus that operates by a processor executing a program stored in a memory.

The UDM 40 includes a communication unit 41 and a control unit 42. The communication unit 41 and the control unit 42 may be software or a module whose processing is performed by a processor executing a program stored in a memory. Alternatively, the communication unit 41 and the control unit 42 may be a circuit or hardware such as a chip.

The communication unit 41 receives, from the AMF 30, information indicating whether the AMF 30 supports the NSSAA feature.

The control unit 42 determines, by using the received information, whether the AMF 30 supports the NSSAA feature. For example, when the communication unit 41 receives, from the AMF 30, information directly or explicitly indicating whether the AMF 30 supports the NSSAA feature, the control unit 42 makes determination according to the information being directly or explicitly indicated. Herein, the communication unit 41 sometimes receives, from the AMF 30, a message that does not directly indicate whether the AMF 30 supports the NSSAA feature. In such a case, the control unit 42 may determine that the AMF 30 does not support the NSSAA feature. In other words, in such a case, it can be said that the communication unit 41 receives information indirectly or impliedly indicating whether the NSSAA feature is supported. The information directly or explicitly indicating that the NSSAA feature is supported is also expressed as an indicator indicating that the NSSAA feature is supported. The information directly or explicitly indicating that the NSSAA feature is not supported is also expressed as an indicator indicating that the NSSAA feature is not supported. Further, the information indirectly or impliedly indicating that the NSSAA feature is supported is also expressed as information that does not include an indicator indicating that the NSSAA feature is supported.

An operation when it is determined in the control unit 42 that the AMF 30 supports the NSSAA feature will be described. In this case, one or more pieces of S-NSSAI indicating a network slice requesting the NSSAA procedure may be transmitted together with the Subscribed NSSAI to the AMF 30 via the communication unit 41. The S-NSSAI is used as identification information for identifying a network slice. Alternatively, the control unit 42 may transmit, to the AMF 30 via the communication unit 41, the Subscribed NSSAI including only piece of S-NSSAI indicating a network slice requesting the NSSAA procedure. Alternatively, the control unit 42 may transmit, to the AMF 30 via the communication unit 41, S-NSSAI including at least one of one or more pieces of S-NSSAI indicating a network slice requesting the NSSAA procedure and one or more pieces of S-NSSAI indicating a network slice that does not request the NSSAA procedure, and the Subscribed NSSAI.

Next, an operation when it is determined in the control unit 42 that the AMF 30 does not support the NSSAA feature will be described. In this case, the control unit 42 may not provide, as the Subscribed NSSAI, S-NSSAI indicating a network slice requesting the NSSAA procedure to the AMF 30. For example, the control unit 42 may delete, exclude, or not include, from the Subscribed NSSAI, S-NSSAI indicating a network slice requesting the NSSAA procedure, and transmit the Subscribed NSSAI to the AMF 30. When all network slice indicated by the S-NSSAI included in the Subscribed NSSAI requests the NSSAA procedure, the control unit 42 may not provide the Subscribed NSSAI to the AMF 30 or may provide empty Subscribed NSSAI to the AMF 30. In other words, the control unit 42 notifies the AMF 30 of only the S-NSSAI indicating a network slice that does not request the NSSAA procedure among network slices to which the UE 20 subscribes. As a result, when the AMF 30 does not support the NSSAA feature, the UE 20 that supports the NSSAA procedure can be prevented from being permitted to access the network slice requesting the NSSAA procedure without performing the NSSAA procedure.

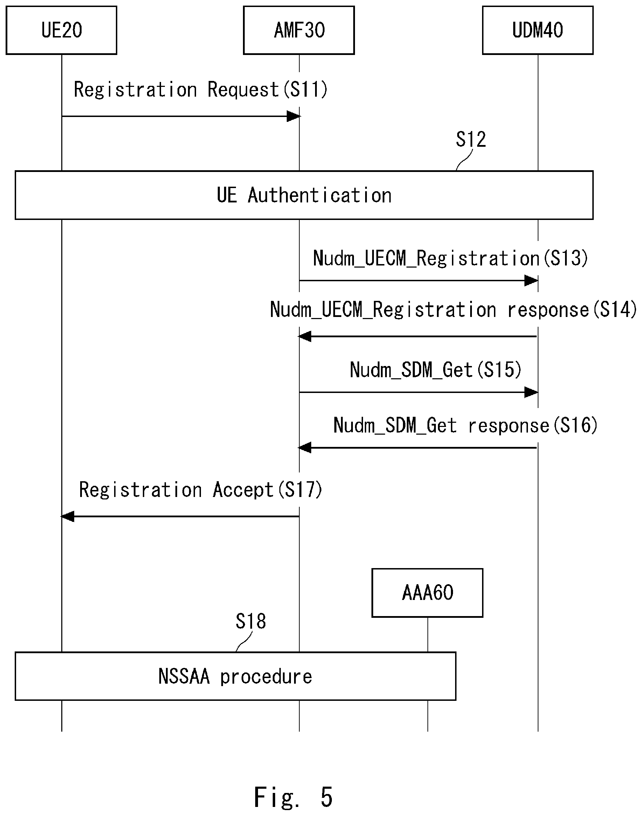

Then, a flow of Registration processing according to the aspect 2 will be described by using Fig. 5. Herein, it is assumed that the UE 20, the AMF 30, and the UDM 40 support the NSSAA feature. Further, it is assumed that the UE 20 and the AMF 30 support a feature related to the NSSAA procedure.

A fact that the UE 20 supports the feature related to the NSSAA procedure may mean that the UE 20 can perform the NSSAA procedure with a security apparatus disposed in a network slice. Further, a fact that the UE 20 supports the feature related to the NSSAA procedure may also mean that capability information indicating that the NSSAA procedure can be performed can be notified to the AMF 30.

First, the UE 20 transmits a Registration Request to the AMF 30 (S11). The Registration Request includes Requested NSSAI. Furthermore, the Registration Request includes information indicating that the UE 20 can perform the NSSAA procedure. The information indicating that the UE 20 can perform the NSSAA procedure may be indicated as capability information of the UE 20.

Next, authentication processing related to the UE 20 is performed among the UE 20, the AMF 30, the UDM 40 (S12). Herein, it is assumed that the UE 20 is authenticated as a UE capable of using the 5GS.

Next, the AMF 30 transmits Nudm_UECM_Registration to the UDM 40 (S13). Step S13 is performed for registering the AMF 30 in the UDM 40.

Since the AMF 30 supports the NSSAA feature, a parameter indicating that the AMF 30 supports the NSSAA feature is included in Nudm_UECM_Registration. The parameter indicating that the NSSAA feature is supported may also be referred to as an indicator indicating that the NSSAA feature is supported.

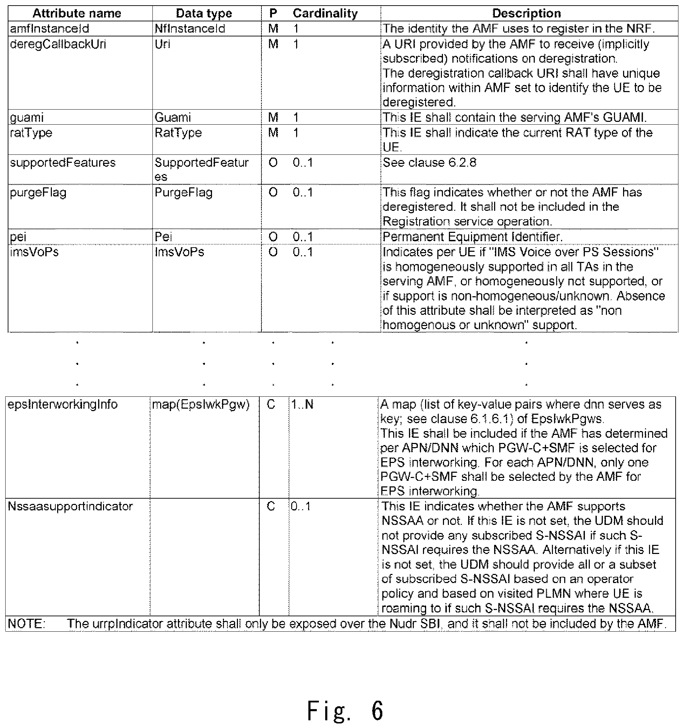

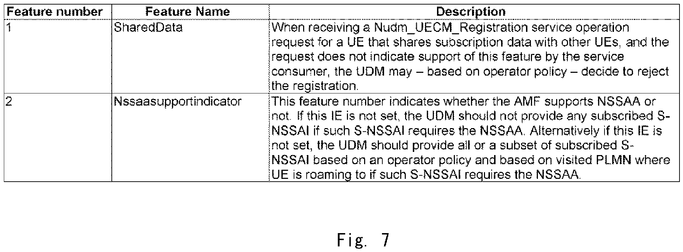

The parameter indicating that the NSSAA feature is supported will be described by using Figs. 6 and 7.

Fig. 6 illustrates a list of parameters set in Nudm_UECM_Registration. A table illustrated in Fig. 6 refers to a table indicated in 3GPP TS 29.503 V16.0.0 (2019-06). Note that description of a part of parameters in the table indicated in 3GPP TS 29.503 V16.0.0 (2019-06) is omitted from the table illustrated in Fig. 6.

In the table illustrated in Fig. 6, Nssaasupportindicator is included as a parameter. When Nssaasupportindicator is set in Nudm_UECM_Registration transmitted from the AMF 30, it indicates that the AMF 30 supports the NSSAA feature.

Further, Fig. 7 illustrates a parameter set in supportedFeatures in Fig. 6. Fig. 7 illustrates that Nssaasupportindicator is set in supportedFeatures. Nssaasupportindicator may be a parameter at the same level as a parameter such as supportedFeatures as illustrated in Fig. 6, and may be a parameter set in supportedFeatures as in Fig. 7.

Returning to Fig. 5, the UDM 40 transmits, to the AMF 30, an Nudm_UECM_Registration response as a response to Nudm_UECM_Registration (S14).

Next, the AMF 30 transmits Nudm_SDM_Get to the UDM 40 (S15). Step S15 is performed for acquiring subscriber information by the AMF 30 from the UDM 40. A parameter indicating that the AMF 30 supports the NSSAA feature may be included in Nudm_SDM_Get.

Next, the UDM 40 transmits, to the AMF 30, an Nudm_SDM_Get response as a response to Nudm_SDM_Get (S16). The UDM 40 receives Nudm_UECM_Registration including Nssaasupportindicator in step S13. In other words, the UDM 40 recognizes that the AMF 30 supports the NSSAA feature. Alternatively, the UDM 40 receives Nudm_SDM_Get including Nssaasupportindicator in step S15. In other words, the UDM 40 recognizes that the AMF 30 supports the NSSAA feature. Thus, the UDM 40 may include, in the Nudm_SDM_Get response, Subscribed NSSAI and one or more pieces of S-NSSAI indicating a network slice requesting the NSSAA procedure. Alternatively, the UDM 40 may include, in the Nudm_SDM_Get response, Subscribed NSSAI including only piece of S-NSSAI indicating a network slice requesting the NSSAA procedure. Alternatively, the UDM 40 may transmit, to the AMF 30 via the communication unit 41, S-NSSAI including at least one of one or more pieces of S-NSSAI indicating a network slice requesting the NSSAA procedure and one or more pieces of S-NSSAI indicating a network slice that does not request the NSSAA procedure, and the Subscribed NSSAI.

Next, the AMF 30 transmits Registration Accept to the UE20 (S17). The AMF 30 may include at least one of Allowed NSSAI and Rejected NSSAI in Registration Accept.

The AMF 30 may include, in Registration Accept, the Allowed NSSAI including the S-NSSAI that is included in the Requested NSSAI and the Subscribed NSSAI and does not correspond to a network slice requesting the NSSAA procedure. Furthermore, the AMF 30 may include, in Registration Accept, the Rejected NSSAI including the S-NSSAI that is not included in the Subscribed NSSAI among pieces of the S-NSSAI included in the Requested NSSAI. Furthermore, the AMF 30 may include, in Registration Accept, the Rejected NSSAI including the S-NSSAI that is included in the Requested NSSAI and the Subscribed NSSAI and corresponds to a network slice requesting the NSSAA procedure. A cause value (or a rejection cause value) indicating that the NSSAA procedure is targeted to be performed or is planned to be performed may be associated with the S-NSSAI that is included in the Rejected NSSAI and corresponds to a network slice requesting the NSSAA procedure.

Alternatively, in step S16, an operation may be performed as follows when the UDM 40 includes, in the Nudm_SDM_Get response, the Subscribed NSSAI including only the S-NSSAI indicating a network slice requesting the NSSAA procedure. In this case, the AMF 30 may include, in Registration Accept, the Rejected NSSAI including the S-NSSAI included in the Requested NSSAI and the Subscribed NSSAI. A cause value indicating that the NSSAA procedure is targeted to be performed or is planned to be performed may be associated with the S-NSSAI that is included in the Rejected NSSAI and corresponds to a network slice requesting the NSSAA procedure.

Next, the UE 20 performs the network slice-specific authentication and authorization procedure (NSSAA procedure) on the S-NSSAI associated with the cause value indicating that the NSSAA procedure is targeted to be performed or is planned to be performed (S18). The UE 20 performs the NSSAA procedure on the AMF 30 and an AAA 60 being a security apparatus. When there are a plurality of pieces of the S-NSSAI associated with the cause value indicating that the NSSAA procedure is targeted to be performed or is planned to be performed, the UE 20 performs the NSSAA procedure on each piece of the S-NSSAI.

The UE 20 can use a network slice specified by the S-NSSAI having the NSSAA procedure completed.

Then, a flow of Registration processing when the AMF 30 does not support the NSSAA feature will be described by using Fig. 5. Herein, it is assumed that the UE 20 and the UDM 40 support the NSSAA feature. Further, it is assumed that the UE 20 supports a feature of the NSSAA procedure.

A fact that the AMF 30 does not support the NSSAA feature includes the following case. For example, the AMF 30 can set Nssaasupportindicator for Nudm_UECM_Registration, but a case where the AMF 30 does not set Nssaasupportindicator for Nudm_UECM_Registration, based on a policy of an operator and the like, is also included. The operator may also be referred to as a communication operator, a communication carrier, and the like.

Hereinafter, processing different from the flow of the Registration processing when the AMF 30 supports the NSSAA feature will be mainly described.

In step S13, the AMF 30 transmits Nudm_UECM_Registration that does not include Nssaasupportindicator. In other words, the AMF 30 does not set Nssaasupportindicator for Nudm_UECM_Registration, and does not also set Nssaasupportindicator for supportedFeatures. Alternatively, in step S15, the AMF 30 transmits Nudm_SDM_Get that does not include Nssaasupportindicator. In other words, the AMF 30 does not set Nssaasupportindicator for Nudm_SDM_Get, and does not also set Nssaasupportindicator for supportedFeatures.

Furthermore, in step S16, the UDM 40 deletes or excludes S-NSSAI of a network slice requesting the NSSAA procedure from Subscribed NSSAI, and transmits the Nudm_SDM_Get response to the AMF 30. In this case, in the Subscribed NSSAI, only piece of the S-NSSAI indicating a network slice that does not request the NSSAA procedure is included, or none of the S-NSSAI is included.

Furthermore, in step S17, the AMF 30 includes, in Registration Accept, Allowed NSSAI including S-NSSAI included in Requested NSSAI and the Subscribed NSSAI. Furthermore, the AMF 30 may include, in Registration Accept, Rejected NSSAI including the S-NSSAI that is included in the Requested NSSAI and is not included in the Subscribed NSSAI. In this case, the UE 20 never receives the S-NSSAI associated with the cause value indicating that the NSSAA procedure is targeted to be performed or is planned to be performed. Thus, a procedure (S18) of requesting the NSSAA procedure cannot be performed. Furthermore, the UE 20 never receives the Allowed NSSAI including the S-NSSAI indicating a network slice requesting the NSSAA procedure. As a result, the UE 20 cannot use a network slice requesting the NSSAA procedure.

As described above, when the NSSAA feature is not supported in the AMF 30, the UDM 40 does not notify the AMF 30 of a network slice requesting the NSSAA procedure. In this way, the AMF 30 never notifies the UE 20 of the Allowed NSSAI including the S-NSSAI indicating a network slice requesting the NSSAA procedure. As a result, the UE 20 can be prevented from being permitted to access a network slice requesting the NSSAA procedure from the UE 20 without performing the NSSAA procedure.

Further, as described above, when the AMF 30 does not support the NSSAA feature, the UE 20 cannot access a network slice requesting the NSSAA procedure at all.

Instead of such processing, for example, when the AMF 30 does not support the NSSAA feature, the UDM 40 may select the S-NSSAI set for Subscribed NSSAI, based on a predetermined reference such as an operator policy. The operator policy may be a policy determined by an operator who manages a home network (PLMN), and may be a policy determined by an operator who manages a network (visited PLMN) being a roaming destination. For example, the UDM 40 may determine, for each AMF, whether the S-NSSAI indicating a network slice requesting the NSSAA procedure is set for the Subscribed NSSAI. Specifically, even when an AMF in a specific region does not support the NSSAA feature, the UDM 40 may set, for the AMF, the S-NSSAI of a network slice requesting the NSSAA procedure, for the Subscribed NSSAI. Alternatively, the UDM 40 may set, for an AMF that does not support the NSSAA feature, the S-NSSAI of a network slice requesting the NSSAA procedure, for the Subscribed NSSAI only in a specific period. Alternatively, the UDM 40 may set, for an AMF that does not support the NSSAA feature, the S-NSSAI of a network slice requesting the NSSAA procedure, which has a high degree of priority, for the Subscribed NSSAI. Alternatively, the UDM 40 may set, for an AMF that does not support the NSSAA feature, default S-NSSAI for the Subscribed NSSAI. A reference for selecting, for an AMF that does not support the NSSAA feature, the S-NSSAI to be set for the Subscribed NSSAI by the UDM 40 is not limited to those described above. According to the configuration described herein, the S-NSSAI requesting the NSSAA procedure can be provided to the UE 20 without performing the NSSAA procedure.

### (Aspect 3)

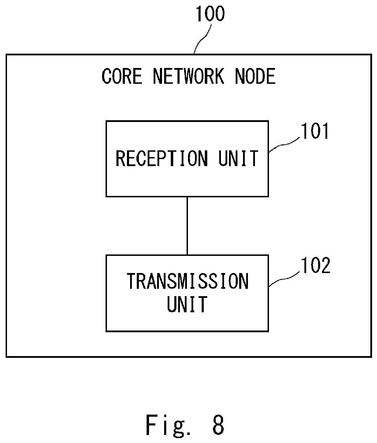

Then, a configuration example of a core network apparatus 100 according to an aspect 3 will be described by using Fig. 8. The core network node 100 according to the aspect 3 may be, for example, an NSSF 50. The core network node 100 includes a reception unit 101 and a transmission unit 102. The reception unit 101 and the transmission unit 102 may be a communication unit.

The reception unit 101 receives a selection request from an access mobility management apparatus in processing of selecting an access mobility management apparatus. The transmission unit 102 transmits, to the access mobility management apparatus that transmits the selection request, information indicating an access mobility management apparatus that supports an NSSAA feature as an access mobility management apparatus to be a candidate for a selection.

The processing of selecting an access mobility management apparatus may be, for example, AMF re-allocation processing. Herein, the AMF re-allocation processing will be described. The AMF re-allocation processing is performed in Registration processing. Specifically, when a UE 20 starts the Registration processing, a base station randomly selects an AMF. Subsequently, the AMF re-allocation processing is performed in order to change the randomly selected AMF. Hereinafter, an AMF 30 is assumed to be an AMF randomly selected first by the base station.

The AMF 30 receives, from the UE 20, information indicating whether the UE 20 supports the NSSAA feature. Herein, when the UE 20 supports the NSSAA procedure, the AMF 30 transmits next information to the NSSF 50. The information is information indicating that an AMF to be newly selected in the AMF re-allocation processing needs to be an AMF that supports the NSSAA feature. In other words, when an AMF to be a candidate is selected, the AMF 30 transmits, to the NSSF 50, information requesting consideration of whether the AMF supports the NSSAA feature.

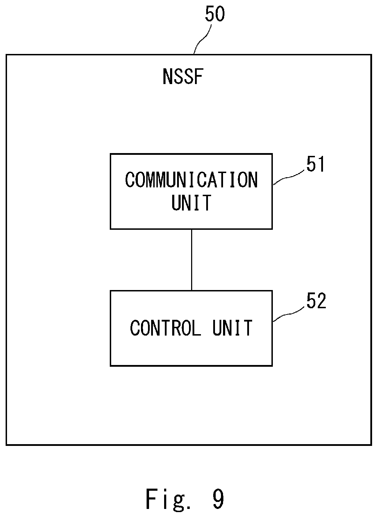

Then, a configuration example of the NSSF 50 that receives information from the AMF 30 will be described by using Fig. 9. The NSSF 50 corresponds to the core network node 100. The NSSF 50 may be a computer apparatus that operates by a processor executing a program stored in a memory.

The NSSF 50 includes a communication unit 51 and a control unit 52. The communication unit 51 and the control unit 52 may be software or a module whose processing is performed by a processor executing a program stored in a memory. Alternatively, the communication unit 51 and the control unit 52 may be a circuit or hardware such as a chip.

The communication unit 51 receives information indicating that an AMF to be newly selected in the AMF re-allocation processing needs to be an AMF that supports the NSSAA feature.

The control unit 52 selects at least one AMF that supports the NSSAA feature. The control unit 52 transmits, to the AMF 30 via the communication unit 51, information that identifies the selected AMF. When an AMF that supports the NSSAA feature is not present, the control unit 52 may select any AMF, and also transmit information indicating that an AMF that supports the NSSAA feature is not present to the AMF 30 via the communication unit 51.

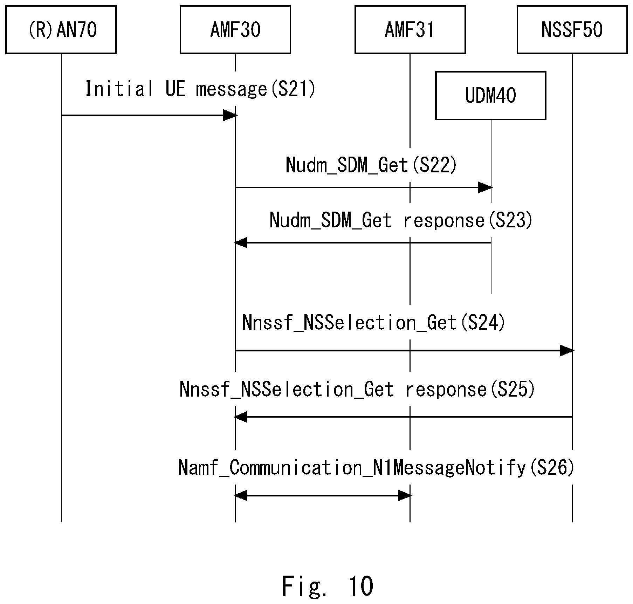

Then, a flow of AMF re-allocation processing according to the aspect 3 will be described by using Fig. 10. Herein, a (R)AN ((radio) access network) 70 is a base station that performs wireless communication with the UE 20. Specifically, the (R)AN 70 may perform wireless communication with the UE 20 by using the 5G being a wireless communication standard determined in the 3 GPP.

First, the (R)AN 70 transmits an Initial UE message to the AMF 30 (S21). The Initial UE message is a message associated with Registration Request transmitted from the UE 20. The Initial UE message includes capability information indicating that the UE 20 can perform the NSSAA procedure.

Next, similarly to steps S15 and S16 in Fig. 5, the AMF 30 acquires subscriber information related to the UE 20 (S22, S23). At this time, similarly to the aspects 1 and 2, the AMF 30 receives information related to a network slice being associated with information indicating whether the NSSAA feature is supported.

Next, the AMF 30 transmits Nnssf_NSSelection_Get to the NSSF 50 in order to perform the AMF re-allocation processing (S24). The AMF 30 recognizes that capability information indicating that the UE 20 can perform the NSSAA procedure is included. Thus, the AMF 30 includes, in Nnssf_NSSelection_Get, information indicating that an AMF to be newly selected needs to be an AMF that supports the NSSAA feature. Furthermore, the AMF 30 may include, in Nnssf_NSSelection_Get, information related to a network slice being associated with the above-described information indicating whether the NSSAA feature is supported.

Next, the NSSF 50 transmits, to the AMF 30, an Nnssf_NSSelection_Get response including identification information about at least one AMF that supports the NSSAA feature (S25). In other words, the NSSF 50 transmits, to the AMF 30, identification information about at least one AMF as a candidate for an AMF to be selected next. Alternatively, when an AMF that supports the NSSAA feature is not present, the NSSF 50 may transmit, to the AMF 30, information indicating that the AMF that supports the NSSAA feature is not present. Based on information related to a network slice being associated with the above-described information indicating whether the NSSAA feature is supported, the NSSF 50 may transmit, to the AMF 30, the Nnssf_NSSelection_Get response including identification information about at least one AMF that supports the NSSAA feature among pieces of the AMF associated with the network slice. Further, even when the NSSF 50 receives Nnssf_NSSelection_Get that does not include the information indicating that an AMF to be newly selected needs to be an AMF that supports the NSSAA feature, the NSSF 50 may preferentially set an AMF that supports the NSSAA feature as a candidate for an AMF to be selected next.

Herein, it is assumed that the AMF 30 selects an AMF 31 from among pieces of identification information about an AMF being received from the NSSF 50. In this case, the AMF 30 transmits Namf_Communication_N1MessageNotify to the AMF 31, and receives a response message thereof (S26).

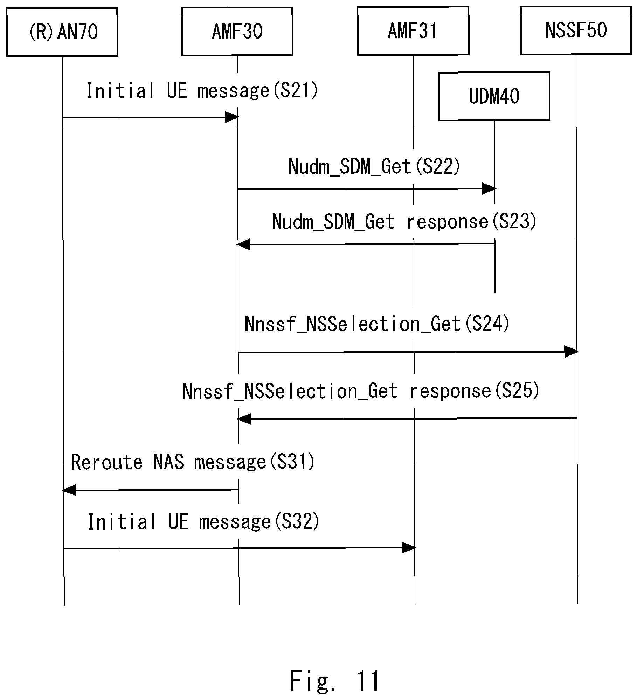

Further, a flow of AMF re-allocation processing different from that in Fig. 10 will be described by using Fig. 11. Steps S21 to S25 in Fig. 11 are similar to those in Fig. 10, and thus detailed description thereof will be omitted.

In step S25, the AMF 30 receives identification information about an AMF from the NSSF 50, selects a new AMF, and then transmits a Reroute NAS message to the (R)AN 70 (S31). The AMF 30 includes, in the Reroute NAS message, identification information about the AMF 31 selected as a new AMF. Alternatively, when the (R)AN 70 selects an AMF, the AMF 30 may include, in the Reroute NAS message, identification information about one or more AMFs being received from the NSSF 50.

Next, the (R)AN 70 transmits an Initial UE message to the AMF 31 included in the Reroute NAS message. Fig. 11 is different from Fig. 10 in a point that the (R)AN 70 transmits the Initial UE message to the AMF 31 designated by the AMF 30.

As described above, even when an AMF that supports the NSSAA procedure and an AMF that does not support the NSSAA procedure are included in a communication system, the NSSF 50 can transmit an appropriate AMF as a candidate to be selected next to the AMF 30. Herein, the appropriate AMF is an AMF that supports the NSSAA procedure.

Further, in the description of Figs. 10 and 11, when the AMF 30 receives capability information indicating that the UE 20 can perform the NSSAA procedure in step S21, the AMF 30 transmits next information to the NSSF 50. The next information is information indicating that an AMF to be newly selected needs to be an AMF that supports the NSSAA feature.

Herein, the AMF 30 may receive subscriber information of the UE 20 in step S23, and then determine whether S-NSSAI included in Subscribed NSSAI or Requested NSSAI corresponds to a network slice requesting the NSSAA procedure. When the AMF 30 determines that the S-NSSAI included in the Subscribed NSSAI or the Requested NSSAI corresponds to the network slice requesting the NSSAA procedure, the AMF 30 may include the information described above in Nnssf_NSSelection_Get in step S24. The information described above is information indicating that an AMF to be newly selected needs to be an AMF that supports the NSSAA feature.

In other words, the AMF 30 may transmit the information described above when two conditions below are satisfied.
(1) The UE 20 can perform the NSSAA procedure.
(2) S-NSSAI included in the Subscribed NSSAI or the Requested NSSAI corresponds to a network slice requesting the NSSAA procedure.

Further, when the AMF 30 supports the NSSAA feature in file updating and the like, the AMF 30 may notify the NSSF 50 that the AMF 30 supports the NSSAA procedure. Further, at a time of activation, the AMF 30 may notify the NSSF 50 that the AMF 30 supports the NSSAA procedure. Further, when the AMF 30 stops supporting the NSSAA feature in file updating and the like, the AMF 30 may notify the NSSF 50 that the AMF 30 stops supporting the NSSAA feature. In other words, the AMF 30 may notify the NSSF 50 of a change in NSSAA capability information.

In this way, the AMF 30 notifies the NSSF 50 of a support situation of the NSSAA feature, the NSSF 50 can constitute a database that manages capability information related to each AMF. In such a case, the NSSF 50 can select an AMF that supports the NSSAA feature as an AMF to be a candidate selected next by referring to the database.

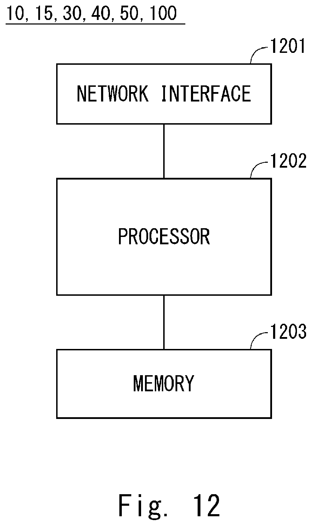

Fig. 12 is a block diagram illustrating a configuration example of the core network node 15, the core network node 100, the access mobility management apparatus 10, the AMF 30, the UDM 40, and the NSSF 50 (hereinafter collectively referred to as the core network node 15). With reference to Fig. 12, the core network node 15 includes a network interface 1201, a processor 1202, and a memory 1203. The network interface 1201 is used for communicating with another network node apparatus constituting a communication system. The network interface 1201 may include, for example, a network interface card (NIC) conforming to IEEE 802.3 series. Alternatively, the network interface 1201 may be used for performing wireless communication. For example, the network interface 1201 may be used for performing wireless LAN communication or mobile communication determined in the 3GPP (third-generation partnership project).

The processor 1202 performs processing of the core network apparatus 15 described by using the flowchart or the sequence in the aspects described above by reading software (computer program) from the memory 1203 and executing the software. The processor 1202 may be, for example, a microprocessor, a micro processing unit (MPU), or a central processing unit (CPU). The processor 1202 may include a plurality of processors.

The memory 1203 is formed of a combination of a volatile memory and a non-volatile memory. The memory 1203 may include a storage disposed away from the processor 1202. In this case, the processor 1202 may access the memory 1203 via an I/O interface that is not illustrated.

In the example in Fig. 12, the memory 1203 is used for storing a software module group. The processor 1202 performs the processing of the core network apparatus 15 described in the aspects described above by reading the software module group from the memory 1203 and executing the software module group.

As described by using Fig. 12, each processor included in the core network apparatus 15 executes one or a plurality of programs including a command group for causing a computer to perform an algorithm described by using the drawings.

In the example described above, a program is stored by using a non-transitory computer readable medium of various types, and can be supplied to a computer. The non-transitory computer-readable medium includes a tangible storage medium of various types. Examples of the non-transitory computer readable medium include a magnetic recording medium, an optical magnetic recording medium (for example, an optical magnetic disk), a CD-ROM (read only memory), a CD-R, a CD-R/W, and a semiconductor memory. The magnetic recording medium may be, for example, a flexible disk, a magnetic tape, and a hard disk drive. A semiconductor memory may be, for example, a mask ROM, a programmable ROM (PROM), an erasable PROM (EPROM), a flash ROM, and a random access memory (RAM). Further, a program may be supplied to a computer by a transitory computer readable medium of various types. Examples of the transitory computer-readable medium include an electric signal, an optical signal, and an electromagnetic wave. The transitory computer-readable medium can supply a program to a computer via a wired communication path such as an electric wire and an optical fiber or a wireless communication path.

User equipment (UE) (or including a mobile station, a mobile terminal, a mobile device, a communication terminal, a wireless device, or the like) in the present specification is an entity connected to a network via a wireless interface.

The UE in the present specification is not limited to a dedicated communication device, and may be any equipment as follows including a communication function as the UE described in the present specification.

Each of "user equipment (UE) (as a word used in the 3GPP)", a "mobile station", a "mobile terminal", a "mobile device", and a "wireless terminal" as a term is intended to generally synonymous with each other, and may be a stand-alone mobile station such as a terminal, a cellular phone, a smartphone, a tablet, a cellular IoT terminal, and an IoT device.

Note that it can be understood that the "UE" and the "wireless terminal" as a term also include a device that is stationary for a long period of time.

Further, the UE may be, for example, production facilities, manufacturing facilities and/or an energy-related machine (as one example, a boiler, an engine, a turbine, a solar panel, a wind power generator, a hydroelectric generator, a thermal power generator, an atomic power generator, a storage battery, an atomic power system, atomic power-related equipment, heavy electric equipment, a pump including a vacuum pump, a compressor, a fan, an air blower, hydraulic equipment, air pressure equipment, a metalworking machine, a manipulator, a robot, a robot application system, a tool, a die, a roll, a conveyance device, a raising and lowering device, a freight device, a textile machine, a sewing machine, a printer, a printing-related machine, a paper machine, a chemical machine, a mining machine, a mining-related machine, a construction machine, a construction-related machine, an agricultural machine and/or appliance, a forestry machine and/or appliance, a fishery machine and/or appliance, a safety and/or environmental preservation appliance, a tractor, a bearing, a precision bearing, a chain, a gear, a power transmission device, a lubricating device, a valve, a pipe fitting, and/or an application system of any equipment or machine described above).

Further, the UE may be, for example, a transportation device (as one example, a vehicle, a car, a two-wheeled vehicle, a bicycle, a train, a bus, a bicycle cart, a rickshaw, ship and other watercraft, an airplane, a rocket, a satellite, a drone, a balloon, and the like).

Further, the UE may be, for example, an information communication device (as one example, an electronic computer and a related device, a communication device and a related device, an electronic component, and the like).

Further, the UE may be, for example, a freezer, freezer application product and device, commercial and service equipment, a vending machine, an automatic service machine, office machine and device, consumer electrical and electronic machine appliance (as one example, voice equipment, a speaker, a radio, video equipment, a television, a multifunctional microwave open, a rice cooker, a coffee maker, a dishwasher, a drier, a fan, a ventilation fan, and a related product, a vacuum cleaner, and the like).

Further, the UE may be, for example, an electronic application system or an electronic application device (as one example, an X-ray device, a particle acceleration device, a radioactive substance application device, a sound wave device, an electromagnetic application device, a power application device, and the like).

Further, the UE may be, for example, an electric bulb, lighting, a weighing machine, analysis equipment, a testing machine, and a measurement machine (as one example, a smoke alarm, a human alarm sensor, a motion sensor, a wireless tag, and the like) a watch or a clock, a physical and chemical machine, an optical machine, medical equipment and/or a medical system, a weapon, cutlery, a hand tool, or the like.

Further, the UE may be, for example, a personal digital assistant or a device including a wireless communication function (as one example, an electronic device (for example, a personal computer, an electronic measuring instrument, and the like) to which a wireless card, a wireless module, and the like are attached or inserted).

Further, the UE may be, for example, a device that provides the following application, service, and solution or a part of the device in "Internet of Things (IoT)" using wired and wireless communication techniques.

An IoT device (or thing) includes appropriate electronic equipment, software, sensor, network connection, and the like that enable data collection and data exchange between devices and with another communication device.

Further, the IoT device may be automated equipment that follows a software command stored in an internal memory.

Further, the IoT device may operate without a need to be supervised or handled by human.
Further, the IoT device may be a device provided over a long period and/or remain in an inactive state over a long period.

Further, the IoT device may be mounted as a part of a stationary device. The IoT device may be embedded in a non-stationary device (for example, a vehicle and the like), or may be attached to an animal and a person to be monitored/tracked.

It can be understood that an IoT technique can be mounted on any communication device that can be connected to a communication network that transmits and receives data regardless of control by input of human or a software command stored in a memory.

It can be understood that the IoT device may be called a machine type communication (MTC) device, a machine to machine (M2M) communication device, or narrow band-IoT (NB-IoT) UE.

Further, it can be understood that the UE can support one or a plurality of IoT or MTC applications.

A few examples of the MTC application are listed in the following table (source: 3GPP TS22.368 V13.2.0(2017-01-13) Annex B). The list is not comprehensive, and indicates an MTC application as one example.

| Service Area | MTC applications |
|---|---|
| Security | Surveillance systems |
| | Backup for landline |
| | Control of physical access (e.g. to |
| | buildings) |
| | Car/driver security |
| Tracking & Tracing | Fleet Management |
| | Order Management |
| | Pay as you drive (PAYD) |
| | Asset Tracking |
| | Navigation |
| | Traffic information |
| | Road tolling |
| | Road traffic optimization/steering |
| Payment | Point of sales (POS) |
| | Vending machines |
| | Gaming machines |
| Health | Monitoring vital signs |
| | Supporting the aged or handicapped |
| | Web Access Telemedicine points |
| | Remote diagnostics |
| Remote Maintenance/Control | Sensors |
| | Lighting |
| | Pumps |
| | Valves |
| | Elevator control |
| | Vending machine control |
| | Vehicle diagnostics |
| Metering | Power |
| | Gas |
| | Water |
| | Heating |
| | Grid control |
| | Industrial metering |
| Consumer Devices | Digital photo frame |
| | Digital camera |
| | eBook |

The application, the service, and the solution may be, as one example, mobile virtual network operator (MVNO) service/system, disaster prevention wireless service/system, a private wireless telephone (private branch exchange (PBX)) service/system, PHS/digital cordless telephone service/system, point of sale (POS) system, an advertisement transmission service/system, multicasting (multimedia broadcast and multicast service (MBMS)) service/system, vehicle to everything (V2X: vehicle-to-vehicle communication and road-to-vehicle/pedestrian-to-vehicle communication) service/system, train mobile wireless service/system, positional information-related service/system, disaster/emergency wireless communication service/system, Internet of Things (IoT) service/system, communication service/system, video distribution service/system, Femto cell application service/system, voice over LTE (VoLTE) service/system, wireless TAG service/system, charging service/system, radio on demand service/system, roaming service/system, user behavior monitoring service/system, communication carrier/communication NW selection service/system, function limiting service/system, proof of concept (PoC) service/system, terminal personal information management service/system, terminal display video service/system, terminal non-communication service/system, ad hoc NW/delay tolerant networking (DTN) service/system, and the like.

Note that the categories of the UE described above are merely application examples of a technical thought and each aspect described in the present specification. The present invention is not limited to the examples, and, of course, various modifications can be made by those skilled in the art.

Note that the present invention is not limited to the example embodiments described above, and may be appropriately modified without departing from the scope of the present invention.

Although the invention of the present application has been described with reference to the example embodiments, the invention of the present application is not limited to the above-described example embodiments. Various modifications that can be understood by those skilled in the art can be made to the configuration and the details of the invention of the present application within the scope of the invention.

This application is based upon and claims the benefit of priority from Japanese patent application No. 2019-174767, filed on September 25, 2019.

### Reference Signs List

- 10: Access mobility management apparatus
- 11: Communication unit
- 12: Control unit
- 15: Core network node
- 16: Communication unit
- 17: Control unit
- 20: UE
- 30: AMF
- 40: UDM
- 41: Communication unit
- 42: Control unit
- 50: NSSF
- 51: Communication unit
- 52: Control unit
- 60: AAA
- 70: (R)AN
- 100: Core network node
- 101: Reception unit
- 102: Transmission unit

## Claims

1. A first core network node (15) in a core network, the first core network node (15) comprising:
reception means (16) for receiving, from a second core network node (10) that acts as an access and mobility management apparatus, first information indicating whether a network slice-specific authentication and authorization, NSSAA, feature is supported by the second core network node (10); and
transmission means (16) for transmitting, to the second core network node (10), second information indicating a network slice being associated with the first information among pieces of information indicating a network slice being associated with a certain piece of subscriber information, wherein
when the first information does not indicate that an NSSAA feature is supported by the second core network node (10), the second information does not include information indicating a network slice requiring NSSAA among pieces of information indicating a network slice being associated with the certain piece of subscriber information.

2. The first core network node (15) according to Claim 1, wherein, when the first information does not indicate that an NSSAA feature is supported by the second core network node (10), the second information includes information indicating a network slice configured not to require NSSAA among pieces of information indicating a network slice being associated with the certain piece of subscriber information.

3. The first core network node (15) according to Claim 2, wherein the network slice configured not to require NSSAA includes at least any of a network slice configured not to be a target of NSSAA, and a network slice configured to be a target of NSSAA, but be usable without performing NSSAA, based on at least either one of an operator policy and a visited destination public land mobile network, PLMN, of a wireless terminal.

4. The first core network node (15) according to any one of Claims 1 to 3, wherein a case where the first information does not indicate that an NSSAA feature is supported by the second core network node (10) is either a case where the first information does not include an indicator indicating that an NSSAA feature is supported by the second core network node (10), or a case where the first information is an indicator indicating that an NSSAA feature is not supported by the second network node.

5. The first core network node (15) according to any one of Claims 1 to 4, wherein, when the first information is an indicator indicating that an NSSAA feature is supported by the second network node, the second information includes at least one or more pieces of information indicating a network slice requiring NSSAA among pieces of information indicating a network slice being associated with the certain piece of subscriber information.

6. The first core network node (15) according to any one of Claims 1 to 5, wherein the reception means is configured to receive the first information by a Get method from the second core network node (10).

7. A second core network node (10) that acts as an access and mobility management apparatus, the second core network node (10) comprising:
transmission means (11) for transmitting, to a first core network node (15) in the core network, first information indicating whether a network slice-specific authentication and authorization, NSSAA, feature is supported by the second core network node (10); and
reception means (11) for receiving, from the first core network node (15), second information indicating a network slice being associated with the first information among pieces of information indicating a network slice being associated with a certain piece of subscriber information, wherein
when the first information does not indicate that an NSSAA feature is supported by the second core network node (10), the second information does not include information indicating a network slice requiring NSSAA among pieces of information indicating a network slice being associated with the certain piece of subscriber information.

8. The second core network node (10) according to Claim 7, wherein, when the first information does not indicate that an NSSAA feature is supported by the second core network node (10), the second information includes information indicating a network slice configured not to require NSSAA among pieces of information indicating a network slice being associated with the certain piece of subscriber information.

9. The second core network node (10) according to Claim 8, wherein the network slice configured not to require NSSAA includes at least any of a network slice other than an NSSAA target, and a network slice configured to be an NSSAA target, but be able to be provided without performing NSSAA, based on at least either one of an operator policy and a visited destination public land mobile network, PLMN, of a wireless terminal.

10. The second core network node (10) according to Claims 7 to 9,
wherein a case where a fact that an NSSAA feature is supported by the second core network node (10) is not indicated is either a case where the first information does not include an indicator indicating that an NSSAA feature is supported by the second core network node (10), or a case where the first information is an indicator indicating that an NSSAA feature is not supported by the second core network node (10).

11. The second core network node (10) according to Claim 7, wherein, when the first information indicates that an NSSAA feature is supported by the second core network node (10), the second information includes at least one or more pieces of information indicating a network slice requiring NSSAA among pieces of information indicating a network slice being associated with the certain piece of subscriber information.

12. A communication method of a first core network node (15) in a core network, the communication method comprising:
receiving, from a second core network node (10) that acts as an access and mobility management apparatus, first information indicating whether a network slice-specific authentication and authorization, NSSAA, feature is supported by the second core network node (10); and
transmitting, to the second core network node (10), second information indicating a network slice being associated with the first information among pieces of information indicating a network slice being associated with a certain piece of subscriber information, wherein
when the first information does not indicate that an NSSAA feature is supported by the second core network node (10), the second information does not include information indicating a network slice requiring NSSAA among pieces of information indicating a network slice being associated with the certain piece of subscriber information.

13. A communication method of a second core network node (10) that acts as an access and mobility management apparatus, the communication method comprising:
transmitting, to a first core network node (15) in the core network, first information indicating whether a network slice-specific authentication and authorization, NSSAA, feature is supported by the second core network node (10); and
receiving, from the first core network node (15), second information indicating a network slice being associated with the first information among pieces of information indicating a network slice being associated with a certain piece of subscriber information wherein
when the first information does not indicate that an NSSAA feature is supported by the second core network node (10), the second information does not include information indicating a network slice requiring NSSAA among pieces of information indicating a network slice being associated with the certain piece of subscriber information.

## Patentansprüche

1. Erster Kernnetzwerkknoten (15) in einem Kernnetzwerk, wobei der erste Kernnetzwerkknoten (15) aufweist:
eine Empfangseinrichtung (16) zum Empfangen von erster Information, die anzeigt, ob ein NSSAA-, netzwerk-slice-spezifische Authentifizierung und Autorisierung, Merkmal durch einen zweiten Kernnetzwerkknoten (10) unterstützt wird, vom zweiten Kernnetzwerkknoten (10), der als eine Zugangs- und Mobilitätsmanagementvorrichtung arbeitet; und
einer Übertragungseinrichtung (16) zum Übertragen von zweiter Information, die einen Netzwerk-Slice anzeigt, der der ersten Information zugeordnet ist, unter Informationselementen, die einen Netzwerk-Slice anzeigen, der einem bestimmten Teilnehmerinformationselement zugeordnet ist, an den zweiten Kernnetzwerkknoten (10), wobei,
wenn die erste Information nicht anzeigt, dass ein NSSAA-Merkmal durch den zweiten Kernnetzwerkknoten (10) unterstützt wird, die zweite Information keine Information, die einen Netzwerk-Slice anzeigt, der NSSAA erfordert, unter Informationselementen enthält, die einen Netzwerk-Slice anzeigen, der dem bestimmten Teilnehmerinformationselement zugeordnet ist.

2. Erster Kernnetzwerkknoten (15) nach Anspruch 1, wobei, wenn die erste Information nicht anzeigt, dass ein NSSAA-Merkmal durch den zweiten Kernnetzwerkknoten (10) unterstützt wird, die zweite Information Information, die einen Netzwerk-Slice anzeigt, der derart konfiguriert ist, dass er NSSAA nicht erfordert, unter den Informationselementen enthält, die einen Netzwerk-Slice anzeigen, der dem bestimmten Teilnehmerinformationselement zugeordnet ist.

3. Erster Kernnetzwerkknoten (15) nach Anspruch 2, wobei der Netzwerk-Slice, der derart konfiguriert ist, dass er keine NSSAA erfordert, einen Netzwerk-Slice, der derart konfiguriert ist, dass er kein Ziel einer NSSAA ist, und/oder einen Netzwerk-Slice enthält, der derart konfiguriert ist, dass er ein Ziel einer NSSAA ist, aber ohne Ausführen einer NSSAA basierend auf Betreibervorschriften und/oder einem besuchten öffentlichen terrestrischen Mobilfunknetz, PLMN, eines drahtlosen Endgeräts verwendbar ist.

4. Kernnetzwerkknoten (15) nach einem der Ansprüche 1 bis 3,
wobei ein Fall, in dem die erste Information nicht anzeigt, dass ein NSSAA-Merkmal durch den zweiten Kernnetzwerkknoten (10) unterstützt wird, entweder ein Fall ist, in dem die erste Information keine Anzeige enthält, die anzeigt, dass ein NSSAA-Merkmal durch den zweiten Kernnetzwerkknoten (10) unterstützt wird, oder ein Fall, in dem die erste Information eine Anzeige ist, die anzeigt, dass ein NSSAA-Merkmal durch den zweiten Netzwerkknoten nicht unterstützt wird.

5. Erster Kernnetzwerkknoten (15) nach einem der Ansprüche 1 bis 4, wobei, wenn die erste Information eine Anzeige ist, die anzeigt, dass ein NSSAA-Merkmal durch den zweiten Netzwerkknoten unterstützt wird, die zweite Information mindestens ein oder mehrere Informationselemente, die einen Netzwerk-Slice anzeigen, der NSSAA erfordert, unter den Informationselementen enthält, die einen Netzwerk-Slice anzeigen, der dem bestimmten Teilnehmerinformationselement zugeordnet ist.

6. Erster Kernnetzwerkknoten (15) nach einem der Ansprüche 1 bis 5, wobei die Empfangseinrichtung dafür konfiguriert ist, die erste Information durch ein Get-Verfahren vom zweiten Kernnetzwerkknoten (10) zu empfangen.

7. Zweiter Kernnetzwerkknoten (10), der als eine Zugangs- und Mobilitätsmanagementvorrichtung arbeitet, wobei der zweite Kernnetzwerkknoten (10) aufweist:
eine Übertragungseinrichtung (11) zum Übertragen von erster Information, die anzeigt, ob ein NSSSA-, netzwerk-slice spezifische Authentifizierung und Autorisierung, Merkmal durch den zweiten Kernnetzwerkknoten (10) unterstützt wird; und
eine Empfangseinrichtung (11) zum Empfangen von zweiter Information, die einen Netzwerk-Slice anzeigt, der der ersten Information zugeordnet ist, unter Informationselementen, die einen Netzwerk-Slice anzeigen, der einem bestimmten Teilnehmerinformationselement zugeordnet ist, vom ersten Kernnetzwerkknoten (15), wobei,
wenn die erste Information nicht anzeigt, dass ein NSSAA-Merkmal durch den zweiten Kernnetzwerkknoten (10) unterstützt wird, die zweite Information keine Information, die einen Netzwerk-Slice anzeigt, der NSSAA erfordert, unter den Informationselementen enthält, die einen Netzwerk-Slice anzeigen, der dem bestimmten Teilnehmerinformationselement zugeordnet ist.

8. Zweiter Kernnetzwerkknoten (10) nach Anspruch 7, wobei, wenn die erste Information nicht anzeigt, dass ein NSSAA-Merkmal durch den zweiten Kernnetzwerkknoten (10) unterstützt wird, die zweite Information Information, die einen Netzwerk-Slice anzeigt, der derart konfiguriert ist, dass er NSSAA nicht erfordert, unter den Informationselementen enthält, die einen Netzwerk-Slice anzeigen, der dem bestimmten Teilnehmerinformationselement zugeordnet ist.

9. Zweiter Kernnetzwerkknoten (10) nach Anspruch 8, wobei der Netzwerk-Slice, der derart konfiguriert ist, dass er kein NSSAA erfordert, einen Netzwerk-Slice, der von einem NSSAA-Ziel verschieden ist, und/oder einen Netzwerk-Slice aufweist, der derart konfiguriert ist, dass er ein NSSAA-Ziel ist, aber in der Lage ist, ohne Ausführen einer NSSAA basierend auf einer Betreibervorschrift und/oder einem besuchten öffentlichen terrestrischen Mobilfunknetz, PLMN, eines drahtlosen Endgeräts bereitgestellt zu werden.

10. Zweiter Kernnetzwerkknoten (10) nach einem der Ansprüche 7 bis 9, wobei ein Fall, in dem eine Tatsache, dass ein NSSAA-Merkmal durch den zweiten Kernnetzwerkknoten (10) unterstützt wird, nicht angezeigt wird, entweder ein Fall ist, in dem die erste Information keine Anzeige enthält, die anzeigt, dass ein NSSAA-Merkmal durch den zweiten Kernnetzwerkknoten (10) unterstützt wird, oder ein Fall, in dem die erste Information eine Anzeige ist, die anzeigt, dass ein NSSAA-Merkmal durch den zweiten Kernnetzwerkknoten (10) nicht unterstützt wird.

11. Zweiter Kernnetzwerkknoten (10) nach Anspruch 7, wobei, wenn die erste Information anzeigt, dass ein NSSAA-Merkmal durch den zweiten Kernnetzwerkknoten (10) unterstützt wird, die zweite Information mindestens ein oder mehrere Informationselemente, die einen Netzwerk-Slice anzeigen, der NSSAA erfordert, unter Informationselementen enthält, die einen Netzwerk-Slice anzeigen, der dem bestimmten Teilnehmerinformationselement zugeordnet ist.

12. Kommunikationsverfahren eines ersten Kernnetzwerkknotens (15) in einem Kernnetzwerk, wobei das Kommunikationsverfahren aufweist:
Empfangen von erster Information, die anzeigt, ob ein NSSAA-, netzwerk-slice-spezifische Authentifizierung und Autorisierung, Merkmal unterstützt wird, von einem zweiten Kernnetzwerkknoten (10), der als eine Zugangs- und Mobilitätsmanagementvorrichtung arbeitet; und
Übertragen von zweiter Information, die einen Netzwerk-Slice anzeigt, der der ersten Information zugeordnet ist, unter Informationselementen, die einen Netzwerk-Slice anzeigen, der einer bestimmten Teilnehmerinformation zugeordnet ist, an den zweiten Kernnetzwerkknoten (10), wobei,
wenn die erste Information nicht anzeigt, dass ein NSSAA-Merkmal durch den zweiten Kernnetzwerkknoten (10) unterstützt wird, die zweite Information keine Information, die einen Netzwerk-Slice anzeigt, der NSSAA erfordert, unter Informationselementen enthält, die einen Netzwerk-Slice anzeigen, der dem bestimmten Teilnehmerinformationselement zugeordnet ist.

13. Kommunikationsverfahren eines zweiten Kernnetzwerkknotens (10), der als eine Zugangs- und Mobilitätsmanagementvorrichtung arbeitet, wobei das Kommunikationsverfahren die Schritte aufweist:
Übertragen von erster Information, die anzeigt, ob ein NSSAA-, netzwerk-slice-spezifische Authentifizierung und Autorisierung, Merkmal, durch den zweiten Kernnetzwerkknoten (10) unterstützt wird, an einen ersten Kernnetzwerkknoten (15) im Kernnetzwerk; und
Empfangen von zweiter Information, die einen Netzwerk-Slice anzeigt, der der ersten Information zugeordnet ist, unter Informationselementen, die einen Netzwerk-Slice anzeigen, der bestimmten Teilnehmerinformationselementen zugeordnet ist, vom ersten Kernnetzwerkknoten (15), wobei,
wenn die erste Information nicht anzeigt, dass ein NSSAA-Merkmal durch den zweiten Kernnetzwerkknoten (10) unterstützt wird, die zweite Information keine Information, die einen Netzwerk-Slice anzeigt, der NSSAA erfordert, unter den Informationselementen enthält, die einen Netzwerk-Slice anzeigen, der einem bestimmten Teilnehmerinformationselement zugeordnet ist.

## Revendications

1. Premier noeud de réseau central (15) dans un réseau central, le premier noeud de réseau central (15) comprenant :
des moyensde réception (16) pour recevoir, en provenance d'un deuxième noeud de réseau central (10) qui agit comme un appareil de gestion d'accès et de mobilité, des premières informations indiquant si une fonctionnalité d'authentification et d'autorisation spécifique à une tranche de réseau, NSSAA, est prise en charge par le deuxième noeud de réseau central (10) ; et
des moyens de transmission (16) pour transmettre, au deuxième noeud de réseau central (10), des deuxièmes informations indiquant qu'une tranche de réseau est associée aux premières informations parmi des éléments d'informations indiquant qu'une tranche de réseau est associée à un certain élément d'informations d'abonné, dans lequel
lorsque les premières informations n'indiquent pas qu'une fonctionnalité NSSAA est prise en charge par le deuxième noeud de réseau central (10), les deuxièmes informations ne comportent pas d'informations indiquant une tranche de réseau nécessitant NSSAA parmi des éléments d'informations indiquant qu'une tranche de réseau est associée au certain élément d'informations d'abonné.

2. Premier noeud de réseau central (15) selon la revendication 1, dans lequel, lorsque les premières informations n'indiquent pas qu'une fonctionnalité NSSAA est prise en charge par le deuxième noeud de réseau central (10), les deuxièmes informations comportent des informations indiquant une tranche de réseau configurée pour ne pas nécessiter NSSAA parmi des éléments d'informations indiquant qu'une tranche de réseau est associée au certain élément d'informations d'abonné.

3. Premier noeud de réseau central (15) selon la revendication 2, dans lequel la tranche de réseau configurée pour ne pas nécessiter NSSAA comporte au moins une quelconque tranche de réseau configurée pour ne pas être une cible de NSSAA, et une tranche de réseau configurée pour être une cible de NSSAA, mais qui est utilisable sans effectuer NSSAA, sur la base d'au moins l'un parmi une politique d'opérateur et un réseau mobile terrestre public, PLMN, de destination visité d'un terminal sans fil.

4. Premier noeud de réseau central (15) selon l'une quelconque des revendications 1 à 3, dans lequel un cas dans lequel les premières informations n'indiquent pas qu'une fonctionnalité NSSAA est prise en charge par le deuxième noeud de réseau central (10) est un cas dans lequel les premières informations ne comportent pas d'indicateur indiquant qu'une fonctionnalité NSSAA est prise en charge par le deuxième noeud de réseau central (10), ou un cas dans lequel les premières informations sont un indicateur indiquant qu'une fonctionnalité NSSAA n'est pas prise en charge par le deuxième noeud de réseau.

5. Premier noeud de réseau central (15) selon l'une quelconque des revendications 1 à 4, dans lequel, lorsque les premières informations sont un indicateur indiquant qu'une fonctionnalité NSSAA est prise en charge par le deuxième noeud de réseau, les deuxièmes informations comportent au moins un ou plusieurs éléments d'informations indiquant une tranche de réseau nécessitant NSSAA parmi des éléments d'informations indiquant qu'une tranche de réseau est associée au certain élément d'informations d'abonné.

6. Premier noeud de réseau central (15) selon l'une quelconque des revendications 1 à 5, dans lequel les moyens de réception sont configurés pour recevoir les premières informations par un procédé Get en provenance du deuxième noeud de réseau central (10).

7. Deuxième noeud de réseau central (10) qui agit comme un appareil de gestion d'accès et de mobilité, le deuxième noeud de réseau central (10) comprenant :
des moyensde transmission (11) pour transmettre, à un premier noeud de réseau central (15) dans le réseau central, des premières informations indiquant si une fonctionnalité d'authentification et d'autorisation spécifique à une tranche de réseau, NSSAA, est prise en charge par le deuxième noeud de réseau central (10) ; et
des moyens de réception (11) pour recevoir, en provenance du premier noeud de réseau central (15), des deuxièmes informations indiquant qu'une tranche de réseau est associée aux premières informations parmi des éléments d'informations indiquant qu'une tranche de réseau est associée à un certain élément d'informations d'abonné, dans lequel
lorsque les premières informations n'indiquent pas qu'une fonctionnalité NSSAA est prise en charge par le deuxième noeud de réseau central (10), les deuxièmes informations ne comportent pas d'informations indiquant une tranche de réseau nécessitant NSSAA parmi des éléments d'informations indiquant qu'une tranche de réseau est associée au certain élément d'informations d'abonné.

8. Deuxième noeud de réseau central (10) selon la revendication 7, dans lequel, lorsque les premières informations n'indiquent pas qu'une fonctionnalité NSSAA est prise en charge par le deuxième noeud de réseau central (10), les deuxièmes informations comportent des informations indiquant une tranche de réseau configurée pour ne pas nécessiter NSSAA parmi des éléments d'informations indiquant qu'une tranche de réseau est associée au certain élément d'informations d'abonné.

9. Deuxième noeud de réseau central (10) selon la revendication 8, dans lequel la tranche de réseau configurée pour ne pas nécessiter NSSAA comporte au moins une quelconque tranche de réseau autre qu'une cible NSSAA, et une tranche de réseau configurée pour être une cible NSSAA, mais capable d'être fourni sans effectuer NSSAA, sur la base d'au moins l'un parmi une politique d'opérateuret un réseau mobile terrestre public, PLMN, de destination visité d'un terminal sans fil.

10. Deuxième noeud de réseau central (10) selon les revendications 7 à 9, dans lequel un cas, dans lequel le fait qu'une fonctionnalité NSSAA est prise en charge par le deuxième noeud de réseau central (10) n'est pas indiqué, est un cas dans lequel les premières informations ne comportent pas d'indicateur indiquant qu'une fonctionnalité NSSAAest prise en charge par le deuxième noeud de réseau central (10), ou un cas dans lequel les premières informations sont un indicateur indiquant qu'une fonctionnalité NSSAA n'est pas prise en charge par le deuxième noeud de réseau central (10).

11. Deuxième noeud de réseau central (10) selon la revendication 7, dans lequel, lorsque les premières informations indiquent qu'une fonctionnalité NSSAA est prise en charge par le deuxième noeud de réseau central (10), les deuxièmes informations comportent au moins un ou plusieurs éléments d'informations indiquant une tranche de réseau nécessitant NSSAA parmi des éléments d'informations indiquant qu'une tranche de réseau est associée au certain élément d'informations d'abonné.

12. Procédé de communication d'un premier noeud de réseau central (15) dans un réseau central, le procédé de communication comprenant :
la réception, en provenance d'un deuxième noeud de réseau central (10) qui agit comme un appareil de gestion d'accès et de mobilité, de premières informations indiquant si une fonctionnalité d'authentification et d'autorisation spécifique à une tranche de réseau, NSSAA, est prise en charge par le deuxième noeud de réseau central (10) ; et
la transmission, au deuxième noeud de réseau central (10), de deuxièmes informations indiquant qu'une tranche de réseau est associée aux premières informations parmi des éléments d'informations indiquant qu'une tranche de réseau est associée à un certain élément d'informations d'abonné, dans lequel
lorsque les premières informations n'indiquent pas qu'une fonctionnalité NSSAA est prise en charge par le deuxième noeud de réseau central (10), les deuxièmes informations ne comportent pas d'informations indiquant une tranche de réseau nécessitant NSSAA parmi des éléments d'informations indiquant qu'une tranche de réseau est associée au certain élément d'informations d'abonné.

13. Procédé de communication d'un deuxième noeud de réseau central (10) qui agit comme un appareil de gestion d'accès et de mobilité, le procédé de communication comprenant :
la transmission, à un premier noeud de réseau central (15) dans le réseau central, de premières informations indiquant si une fonctionnalité d'authentification et d'autorisation spécifique à une tranche de réseau, NSSAA, est prise en charge par le deuxième noeud de réseau central (10) ; et
la réception, en provenance du premier noeud de réseau central (15), de deuxièmes informations indiquant qu'une tranche de réseau est associée aux premières informations parmi des éléments d'informations indiquant qu'une tranche de réseau est associée à un certain élément d'informations d'abonné, dans lequel
lorsque les premières informations n'indiquent pas qu'une fonctionnalité NSSAA est prise en charge par le deuxième noeud de réseau central (10), les deuxièmes informations ne comprennent pas d'informations indiquant une tranche de réseau nécessitant NSSAA parmi des éléments d'informations indiquant qu'une tranche de réseau est associée au certain élément d'informations d'abonné.
